**Europäisches Patentamt**

**European Patent Office**

**Office européen des brevets**

(19)

(11) Veröffentlichungsnummer : **0 501 041 B1**

(12) ## EUROPÄISCHE PATENTSCHRIFT

(45) Veröffentlichungstag der Patentschrift :
01.03.95 Patentblatt 95/09

(51) Int. Cl.$^6$ : **G01L 5/04**

(21) Anmeldenummer : **91122200.8**

(22) Anmeldetag : **23.12.91**

(54) **Verfahren zur Seilspannungsmessung und Vorrichtung zu seiner Durchführung.**

(30) Priorität : **28.02.91 DE 4106266**

(43) Veröffentlichungstag der Anmeldung :
**02.09.92 Patentblatt 92/36**

(45) Bekanntmachung des Hinweises auf die
Patenterteilung :
**01.03.95 Patentblatt 95/09**

(84) Benannte Vertragsstaaten :
**FR GB IT NL**

(56) Entgegenhaltungen :
**US-A- 2 743 606**

(73) Patentinhaber : **Deutsche Aerospace Airbus
GmbH
Kreetslag 10
D-21129 Hamburg (DE)**

(72) Erfinder : **Nowag, Alfons
Uphuser Strasse 22
W-2800 Bremen 41 (DE)**

EP 0 501 041 B1

**Beschreibung**

Die Erfindung betrifft ein Verfahren zur Messung der Seilspannung in einem Seilstrang, bei dem die Kraft gemessen wird, die zur Erzeugung einer vorgegebenen Auslenkung des Seilstranges zwischen zwei Auflagerpunkten erforderlich ist. Ferner betrifft sie eine Vorrichtung zur Durchführung eines solchen Verfahrens.

Die Messung der Seilspannung in einem Seilstrang, der beispielsweise als Steuerseil in einem Flugzeug dient, erfolgt in der Regel mittels einer mechanischen Meßvorrichtung, die auch unter der Bezeichnung Tensiometer bekannt ist. Bei diesem bekannten Verfahren wird der Seilstrang zwischen zwei im Abstand voneinander angeordnete Auflagerpunkte gebracht, durch eine senkrecht zur Verbindungslinie der beiden Auflagerpunkte und mittig zwischen diesen wirkende Kraft gegen die Auflagerpunkte gedrückt und dabei aus der Verbindungslinie der Auflagerpunkte um einen vorgegebenen Betrag ausgelenkt. Aus der für die Erzeugung dieser Auslenkung erforderlichen Kraft kann dann anhand einer Kalibriertabelle die Seilspannung bestimmt werden.

Da jedoch durch den Meßvorgang selbst die Seilspannung, je nach Steifigkeit und Länge des Seiles gegenüber dem vor der Messung vorliegenden Wert vergrößert wird, ist diese Seilspannungsmessung zwangläufig stets mit einem Fehler behaftet. Zudem ist für die Auswertung der Messung immer das Vorhandensein der genannten, vom Hersteller des Flugzeuges bzw. der betreffenden Anordnung, in der die Seilspannung gemessen werden soll, bereitzustellenden Kalibriertabelle erforderlich.

Aufgabe der Erfindung ist es, ein Verfahren anzugeben, mit dem die Seilspannung frei von systematischen Meßfehlern ermittelt werden kann und das zudem schnell und ohne die Notwendigkeit des Vorliegens zusätzlicher Angaben eine exakte Bestimmung dieser Seilspannung ermöglicht. Weiterhin ist es Aufgabe der Erfindung, eine Vorrichtung bereitzustellen, die die Durchführung eines solchen Verfahrens gestattet.

Die Erfindung löst die erste Aufgabe durch ein Verfahren mit den kennzeichnenden Merkmalen des Patentanspruches 1. Die Lösung der zweiten Aufgabe erfolgt durch eine Vorrichtung gemäß dem Kennzeichen des Patentanspruchs 2. Vorteilhafte Weiterbildungen der erfindungsgemäßen Vorrichtung, die vor allem dem Ziel einer weiteren Optimierung und Vereinfachung des Meßvorganges dienen, sind in den weiteren Ansprüchen angegeben.

Aufgrund der dem erfindungsgemäßen Verfahren inhärenten Kompensation sowohl der Seillänge als auch der Seilsteifigkeit durch die vorgesehene Zweifachmessung ist eine exakte Messung der Seilspannung durchführbar, und es wird eine den Meßwert verfälschende Spannungserhöhung vermieden.

Dadurch ist es möglich, die unterschiedlich langen Seile einer Flugzeugsteuerung ohne weitere konstruktionsbedingte Angaben wesentlich schneller, als dies bisher der Fall war, zu ermitteln.

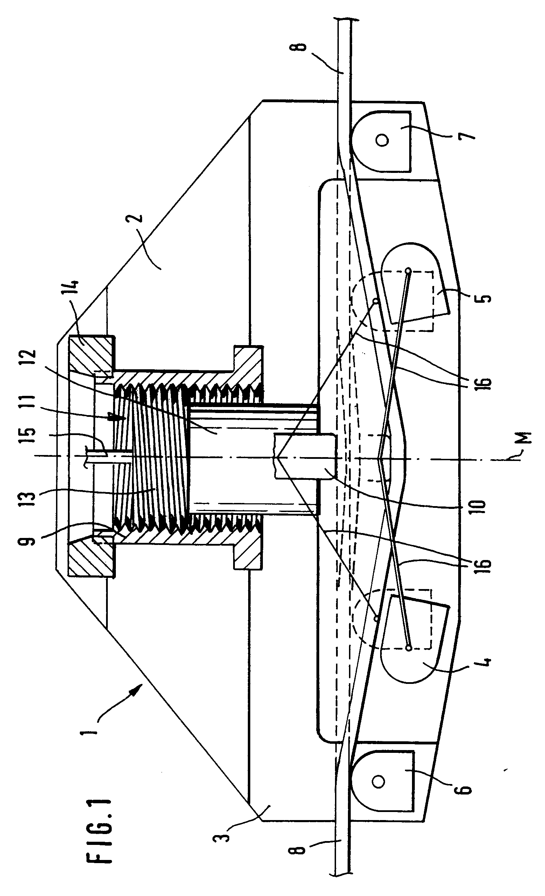

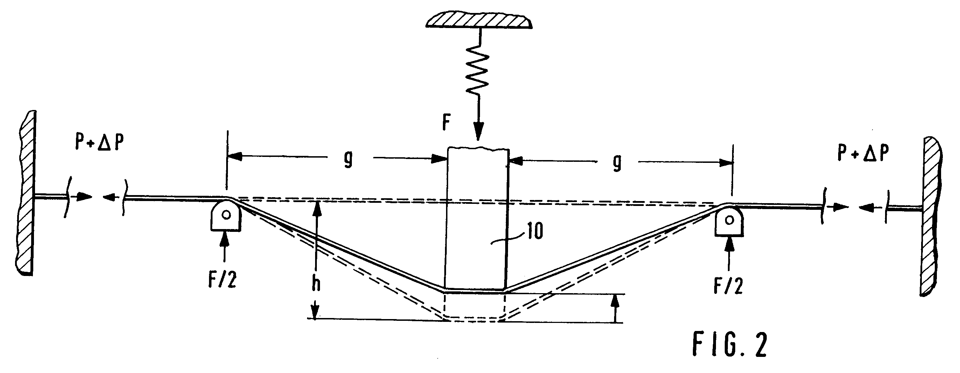

Im folgenden soll die Erfindung anhand der Zeichnung näher erläutert werden. Die Figuren 1 und 2 zeigen dabei eine schematische Darstellung einer Vorrichtung zur Messung der Seilspannung in zwei zueinander senkrechten Ansichten, wobei gleiche Bauteile in beiden Figuren mit den gleichen Bezugszeichen versehen sind.

Die Vorrichtung besteht aus einem Gehäuse 1, das in seinem oberen Teil eine noch näher zu erläuternde Kraftmeßeinrichtung trägt und an dessen unterem, abgesetzten Teilbereich 3 zwei Auflagerpaare 4 und 5 bzw. 6 und 7 für einen Seilstrang 8, dessen Spannung gemessen werden soll, gehaltert sind. Die Auflagerpaare 4,5 bzw. 6,7 sind jeweils symmetrisch in bezug auf die in der Zeichnung vertikale Mittelachse M des Gehäuses 1 mit unterschiedlichen Abständen angeordnet, wobei das Auflagerpaar 4 und 5, wie in Fig. 1 dargestellt, unter das Niveau der Verbindungslinie der von den Auflagerpaaren 4,5 bzw. 6,7 gebildeten Auflagerpunkte abklappbar ist.

Der in der Zeichnung obere Teil 2 des Gehäuses 1 trägt in einer drehbar gelagerten Aufnahmevorrichtung 9 einen mit einem Meßklotz versehenen Meßzylinder 11. In diesem ist eine Kraftmeßdose 12 angeordnet. Zugleich ist der Meßzylinder 11 über eine Verstelleinrichtung, im Fall des hier dargestellten Ausführungsbeispiels eine Spindelmutter 13, in der Aufnahmevorrichtung 9 höhenverstellbar gehalten, wobei zur Verstellung eine Antriebseinheit 14 vorgesehen ist, die über einen hier nicht dargestellten Elektromotor antreibbar ist. Die Kraftmeßdose 12 ist über eine Signalleitung 15 mit einer im Bild nicht dargestellten Auswerte- und Versorgungseinheit verbunden, in der die Verarbeitung der Meßsignale erfolgt und die die erforderliche elektrische Energie bereitstellt und die teilweise im Inneren des Gehäuses 2 untergebracht ist. Schließlich ist bei dem hier dargestellten Ausführungsbeispiel eine Verstellvorrichtung 16 vorgesehen, mit deren Hilfe das innere Auflagerpaar 4 und 5 aus der Meßposition in die inaktive Position und wieder zurück verschwenkt werden kann.

Der Ablauf des Meßverfahrens ist ebenfalls aus Figur 1 ersichtlich:

Zunächst wird bei aktiviertem, d.h. in der aufrechten Position befindlichen inneren Auflagerpaar 4,5 der Meßzylinder 11 und damit der Meßklotz 10 mittels der Antriebseinheit 14 in einem ersten Meßhub um einen definierten Betrag $h_1$ abwärts bewegt und der Seilstrang 8 dabei um diesen Betrag aus seiner Ausgangsposition ausgelenkt, wobei zugleich in der Kraftmeßdose 12 die Kraft $F_1$ gemessen wird, die aufgrund der Vorspannung des Seilstranges 8 der Auslenkung entgegenwirkt. Anschließend wird der Seilstrang 8 wieder entspannt, und das innere Auflagerpaar 4,5 wird mittels der Verstellvorrichtung 16 jeweils, wie in Fig. 1 dargestellt, nach außen weggeklappt. Nunmehr wird, wieder über die Antriebseinheit 14, der Meßzylinder 11 bzw. der Meßklotz 10 in einem zweiten Meßhub um einen Betrag $h_2$, der ein Vielfaches des ersten Meßhubes $h_1$ beträgt, nach unten bewegt. Auch in diesem Fall wird die Kraft $F_2$ gemessen, die zur Erzielung der vorgegebenen Auslenkung des Seilstranges 8 erforderlich ist.

Mit den Stützweiten $g_1$ und $g_2$, die den Abständen der beiden Auflagerpaare 4 und 5 bzw. 6 und 7 entsprechen, errechnet sich nun die Seilkraft P als Summe der mit Faktoren $\alpha$ und $\beta$ multiplizierten Meßwerte $F_1$ und $F_2$:

$$P = \alpha \cdot F_1 + \beta \cdot F_2$$

Die Faktoren $\alpha$ und $\beta$ ergeben sich aus den Auslenkungen $h_1$ und $h_2$ bzw. den Stützweiten $g_1$ und $g_2$ gemäß mit:

$$d = K_1 \left(1 - \frac{D_1}{D_1 - D_2}\right), \qquad \beta = K_2 \frac{D_1}{D_1 - D_2}$$

mit:

$$K_1 = \frac{1}{2h_1} \sqrt{h_1^2 + g_1^2} \qquad K_2 = \frac{1}{2h_2} \sqrt{h_2^2 + g_2^2}$$

$$D_1 = \sqrt{h_1^2 + g_1^2} - g_1 \qquad D_2 = \sqrt{h_2^2 + g_2^2} - g_2$$

Die Division der so errechneten Kraft P durch die bekannte Querschnittsfläche A des Seiles liefert schließlich die gesuchte Seilspannung S = P/A.

Um die beschriebene Anordnung möglichst vielseitig, d.h. für Seile unterschiedlicher Länge und Querschnitte, verwenden zu können, ist es günstig, wenn der Abstand des äußeren Auflagerpaares 6,7 variiert werden kann.

Generell hat sich gezeigt, daß es zur Erzielung eines möglichst exakten Meßergebnisses optimal ist, wenn die nachfolgenden Bedingungen gegeben sind:

- Die erste Messung erfolgt bei geringstmöglichem Meßhub $h_1$ und der kleinstmöglichen Stützweite $g_1$.
- Der Meßhub $h_2$ der zweiten Messung ist so groß wie möglich.
- Die Stützweite $g_2$ des äußeren Auflagerpaares 6,7 ist etwa doppelt so groß wie die des inneren Auflagerpaares 4 und 5.
- Wird der zweite Meßhub stufenweise erhöht und die Seilkraft P mehrfach ermittelt, so ist eine noch genauere Messung durch eine Extrapolation und statistische Auswertung der Ergebnisse möglich.

Abschließend sei noch angemerkt, daß es abweichend von der vorstehend beschriebenen Anordnung im Rahmen der Erfindung selbstverständlich auch möglich ist, die Meßvorrichtung mit nur einem Auflagerpaar auszustatten, das in Richtung des Seilstranges 8 längsverstellbar gehalten ist und das somit die Einstellung unterschiedlicher Stützweiten gestattet. Wichtig ist in jedem Fall, daß die Meßvorrichtung die für eine exakte Messung erforderliche Steifigkeit aufweist.

**Patentansprüche**

1. Verfahren zur Messung der Seilspannung in einem Seilstrang (8), bei dem die Kraft gemessen wird, die zur Erzeugung einer vorgegebenen Auslenkung des Seilstranges (8) zwischen zwei Auflagerpunkten (4,5,6,7) erforderlich ist, dadurch gekennzeichnet, daß in zwei aufeinanderfolgenden Messungen die Kräfte ($F_1$,$F_2$) gemessen werden, die zur Erzeugung von vorgebbaren Auslenkungen ($h_1$,$h_2$) zwischen zwei in unterschiedlichen Abständen ($g_1$,$g_2$) voneinander angeordneten Auflagerpaaren (4,5,6,7) erforderlich sind und daß durch Kombination der Ergebnisse dieser Messungen die Seilspannung (S) ermittelt wird.

2. Vorrichtung zur Durchführung des Verfahrens nach Anspruch 1, bestehend aus im Abstand voneinander angeordneten Auflagern (4,5,6,7), zwischen denen ein senkrecht zur Verbindungslinie der Auflagerpunkte (4,5,6,7) ein beweglicher, mit einer Kraftmeßeinrichtung verbundener Meßklotz (10) gehaltert ist, dadurch gekennzeichnet, daß wenigstens zwei Paare von Auflagerpunkten (4,5,6,7) vorgesehen sind, die mit unterschiedlichen Abständen ($g_1$,$g_2$) jeweils symmetrisch zum Meßklotz (10) liegen und die so ausgebildet sind, daß ein Paar von Auflagerpunkten (4,5) bei Beaufschlagung des zweiten Paares von Auflagerpunkten (6,7) durch den Seilstrang (8) außer Eingriff mit dem Seilstrang (8) bringbar ist.

3. Vorrichtung nach Anspruch 2, dadurch gekennzeichnet, daß die Auflagerpunkte von zwei Auflagerpaaren (4,5 bzw. 6,7) gebildet werden, die in unterschiedlichen Abständen zum Meßklotz (10) gehalten sind.

4. Vorrichtung nach Anspruch 3, dadurch gekennzeichnet, daß das innere, dem Meßklotz (10) benachbart angeordnete Auflagerpaar (4,5) unter das Niveau der Verbindungslinie der Auflagerpunkte des äußeren Auflagerpaares (6,7) schwenkbar gehalten ist.

5. Vorrichtung nach Anspruch 3 oder 4, dadurch gekennzeichnet, daß der Abstand ($g_2$) des äußeren Auflagerpaares (6,7) in etwa doppelt so groß Wie der Abstand ($g_1$) des inneren Auflagerpaares (4,5) ist.

6. Vorrichtung nach einem der Ansprüche 3 bis 5, dadurch gekennzeichnet, daß das äußere Auflagerpaar (6,7) in Richtung des Seilstranges (8) verstellbar gehaltert ist.

7. Vorrichtung nach Anspruch 2, dadurch gekennzeichnet, daß die Auflagerpunkte von einem Auflagerpaar gebildet werden, das in Richtung des Seilstranges (8) verstellbar gehaltert ist.

**Claims**

1. Method for measuring the cable tension in a cable line (8), in which the force required to produce a predetermined deflection of the cable line (8) between two support points (4, 5, 6, 7) is measured, characterised in that the forces ($F_1$, $F_2$) required to produce predeterminable deflections ($h_1$, $h_2$) between two support pairs (4, 5, 6, 7), which are arranged at different spacings ($g_1$, $g_2$) from one another, are measured in two consecutive measurements, and that the cable tension (S) is determined by combining the results of these measurements.

2. Device for carrying out the method according to claim 1, consisting of supports (4, 5, 6, 7) which are arranged at a spacing from one another and between which a measuring block (10) is held, which block can move perpendicularly to the connecting line of the support points (4, 5, 6, 7) and is connected to a force measuring device, characterised in that at least two pairs of support points (4, 5, 6, 7) are provided, each of which is disposed symmetrically about the measuring block (10) at different spacings ($g_1$, $g_2$) from the latter and which are formed such that one pair of support points (4, 5) can be disengaged from the cable line (8) when the second pair of support points (6, 7) is acted upon by the cable line (8).

3. Device according to claim 2, characterised in that the support points are formed by two support pairs (4, 5 and 6, 7, respectively) which are held at different spacings from the measuring block (10).

4. Device according to claim 3, characterised in that the inner support pair (4, 5), which is arranged adjacent to the measuring block (10), is pivotally held below the level of the connecting line of the support points of the outer support pair (6, 7).

5. Device according to claim 3 or 4, characterised in that the spacing ($g_2$) of the outer support pair (6, 7) is approximately twice as great as the spacing ($g_1$) of the inner support pair (4, 5).

6. Device according to any one of claims 3 to 5, characterised in that the outer support pair (6, 7) is held such that it can be displaced in the direction of the cable line (8).

7. Device according to claim 2, characterised in that the support points are formed by a support pair which is held such that it can be displaced in the direction of the cable line (8).

**Revendications**

1. Procédé de mesure de la tension spécifique régnant dans un câble (8) selon lequel on mesure la force nécessaire pour obtenir une déviation donnée du câble (8) tendu entre deux points d'appui (4, 5, 6, 7), caractérisé en ce qu'au cours de deux mesures successives, on mesure les forces ($F_1$, $F_2$) nécessaires pour obtenir des déviations données ($h_1$, $h_2$) entre deux paires d'appuis (4, 5, 6, 7) présentant entre eux des espacements différents ($g_1$, $g_2$), la combinaison des résultats de ces mesures donnant la tension spécifique (5).

2. Dispositif pour la mise en oeuvre du procédé selon la revendication 1, comprenant des appuis (4, 5, 6, 7) espacés entre eux et entre l'un desquels est monté solidement une tête de mesure (10) mobile reliée à un dispositif dynamométrique, perpendiculairement à la ligne reliant les points d'appui (4, 5, 6, 7), caractérisé en ce qu'il comporte au moins deux paires de points d'appui (4, 5, 6, 7), symétriques par rapport à la tête de mesure (10) avec des espacements différents ($g_1$, $g_2$) et constitués de manière qu'une paire de points d'appui (4, 5) peut être mise hors de prise du câble (8) lorsque celui-ci repose sur les points d'appui (6, 7) de l'autre paire.

3. Dispositif selon la revendication 2, caractérisé en ce que les points d'appui sont constitués par deux paires de paliers (4, 5 et 6, 7), montés à des distances différentes par rapport à la tête de mesure (10).

4. Dispositif selon la revendication 3, caractérisé en ce que la paire des paliers internes (4, 5) c'est-à-dire les plus proches de la tête de mesure (10) montés de manière à pouvoir basculer pour venir au-dessous du niveau défini par la ligne reliant la paire d'appuis externes (6, 7).

5. Dispositif selon la revendication 3 ou 4, caractérisé en ce que la distance ($g_2$) entre les appuis externes (6, 7) est sensiblement le double de la distance ($g_1$) entre les appuis internes (4, 5).

6. Dispositif selon une des revendications 3 à 5, caractérisé en ce que la paire d'appuis externes (6, 7) peut être réglable en direction du câble (8).

7. Dispositif selon la revendication 2, caractérisé en ce que les points d'appui sont ceux d'une paire d'appuis réglable selon la direction du câble.

FIG.1

EP 0 501 041 B1

FIG. 2

EP 0 501 041 B1